# FASCICULE DE BREVET EUROPEEN

(11) **EP 3 746 639 B1**
(45) Date de publication et mention de la délivrance du brevet: **15.12.2021**
(21) Numéro de dépôt: 19707427.1
(22) Date de dépôt: 29.01.2019
(51) Int. Cl.: F01D 5/06, F01D 5/08, F02C 7/18

(54) **ENSEMBLE POUR TURBINE DE TURBOMACHINE COMPRENANT UN ANNEAU MOBILE D'ETANCHEITE**
ANORDNUNG FÜR EINE TURBINE EINER TURBOMASCHINE MIT EINEM BEWEGLICHEN DICHTUNGSRING
ASSEMBLY FOR A TURBINE OF A TURBOMACHINE COMPRISING A MOBILE SEALING RING

(30) Priorité: 30.01.2018 FR 1850737
(43) Date de publication de la demande: 09.12.2020
(73) Titulaire: SAFRAN AIRCRAFT ENGINES, 75015 Paris (FR)
(72) Inventeur: BLANCHARD, Stéphane, Pierre, Guillaume, 77550 MOISSY-CRAMAYEL (FR); TRAPPIER, Nicolas, Xavier, 77550 MOISSY-CRAMAYEL (FR); DE RICHAUD, Quentin, 77550 MOISSY-CRAMAYEL (FR)
(74) Mandataire: Regimbeau
(86) Numéro de dépôt international: PCT/FR2019/050203
(87) Numéro de publication internationale: WO 2019/150042

(56) Documents cités:
- EP-A1- 0 921 273
- WO-A1-2005/052321
- FR-A1- 2 995 036
- FR-A1- 3 019 584

## Description

### DOMAINE DE L'INVENTION

L'invention concerne un ensemble pour turbine de turbomachine.

L'invention vise plus spécifiquement un ensemble pour turbine de turbomachine comprenant une pièce formant anneau mobile d'étanchéité.

### ETAT DE LA TECHNIQUE

On connaît du document FR 2 953 250 un ensemble pour turbine d'une turbomachine comprenant une pièce formant anneau mobile d'étanchéité.

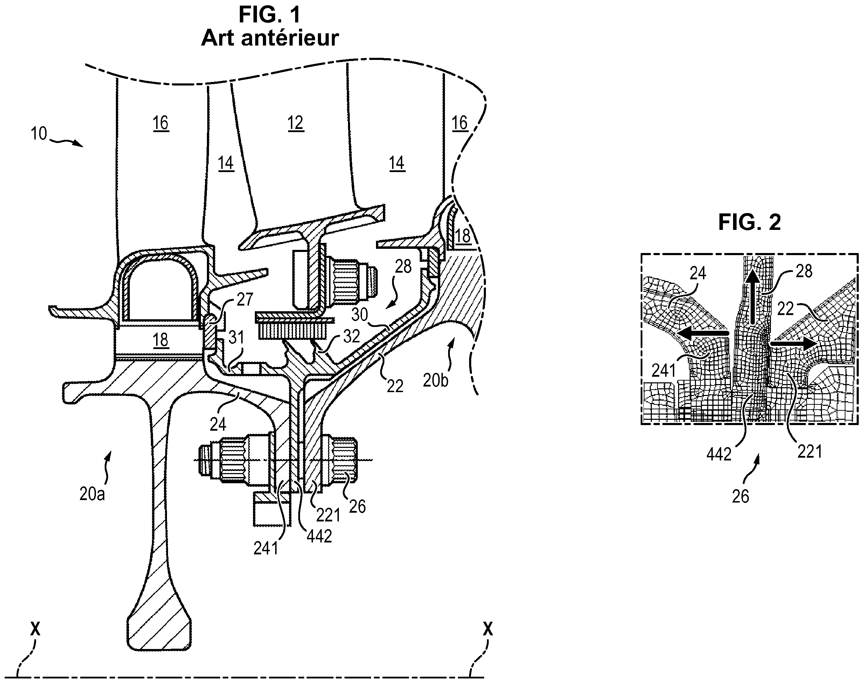

En référence à la figure 1, la turbine 10 se compose d'un distributeur formé d'une pluralité d'aubes fixes 12 disposées dans une veine d'écoulement 14, et d'une roue mobile placée derrière le distributeur et formée d'une pluralité d'aubes mobiles 16 également disposées dans la veine d'écoulement 14 et montées par leur pied dans des alvéoles 18 de disques de rotor 20a, 20b.

Les disques de rotor de la turbine 20a, 20b sont centrés sur un axe longitudinal X-X de la turbomachine, et sont généralement assemblés entre eux au moyen d'une virole amont 22 de disque aval 20b, et d'une virole aval 24 de disque amont 20a qui sont fixées entre elles par une liaison boulonnée 26 traversant des brides de fixation 221 et 241. Cet assemblage de disques 20a, 20b est lui-même relié à un arbre de turbine (non représenté) pour être entraîné en rotation.

De plus, un anneau mobile 28 porteur de léchettes radiales 32 est disposé à la jonction entre les disques de rotor 20a, 20b successifs, en regard de l'aube fixe 12 correspondante.

L'anneau mobile 28 est fixé à la liaison boulonnée 26 et comprend une bride de maintien aval 30 venant en appui contre l'alvéole 18 du disque rotor 20b en aval dudit anneau mobile 28.

L'anneau mobile 28 peut également comprendre une bride amont 31 assurant le maintien d'un anneau de retenue 27 en appui contre le disque 20a en amont de l'anneau mobile 28.

Les léchettes radiales 32 de l'anneau mobile 28 coopèrent avec la surface annulaire interne de l'aube fixe 12 en regard dudit anneau 28, et assurent ainsi l'étanchéité entre une cavité amont et une cavité aval successives de la veine d'écoulement 14 de la turbine.

Or, la portion annulaire externe de l'anneau mobile 28 est soumise à des températures très importantes du fait de la circulation d'air chaud au sein de la veine d'écoulement 14. Il en résulte un fort gradient thermique entre la portion annulaire externe de l'anneau 28 et sa portion annulaire interne. Ce gradient entraine de fortes contraintes au niveau des brides de fixation 221 et 241. Ce phénomène est plus particulièrement illustré sur la figure 2 qui constitue un agrandissement de la portion annulaire externe de la liaison boulonnée 26 entre :
- la bride de fixation 241 de la virole aval 24 d'un disque amont 20a,
- la bride de fixation 221 de la virole amont 22 d'un disque aval 20b, et
- la bride de fixation 442 de l'anneau mobile 28 disposé entre le disque amont 20a et le disque aval 20b.

Sur la figure 2, la flèche verticale illustre le sens et la direction des contraintes mécaniques résultant du gradient thermique dans l'anneau mobile 28 qui se déforme. Il en résulte un fluage dudit anneau mobile 28.

En outre, la liaison boulonnée 26 est soumise à des efforts centrifuges liés à la rotation des disques rotor 20a, 20b. Ces efforts agissent sur la couronne de vis de la liaison boulonnée 26 qui a tendance à s'étendre radialement de sorte à augmenter son rayon ce qui entraîne une déformation des brides pouvant engendrer des fuites.

L'action combinée du gradient thermique et des efforts centrifuges peut donc conduire au phénomène dit « d'ouverture des brides » qui réduit la durée de vie des disques rotor de turbine de turbomachine. Sur la figure 2, les flèches horizontales représentent le phénomène d'ouverture de brides 241 et 221 qui accompagne le fluage.

A cet égard, on connaît du document FR 2 533 620 un autre ensemble pour turbine d'une turbomachine comprenant une pièce formant anneau mobile d'étanchéité.

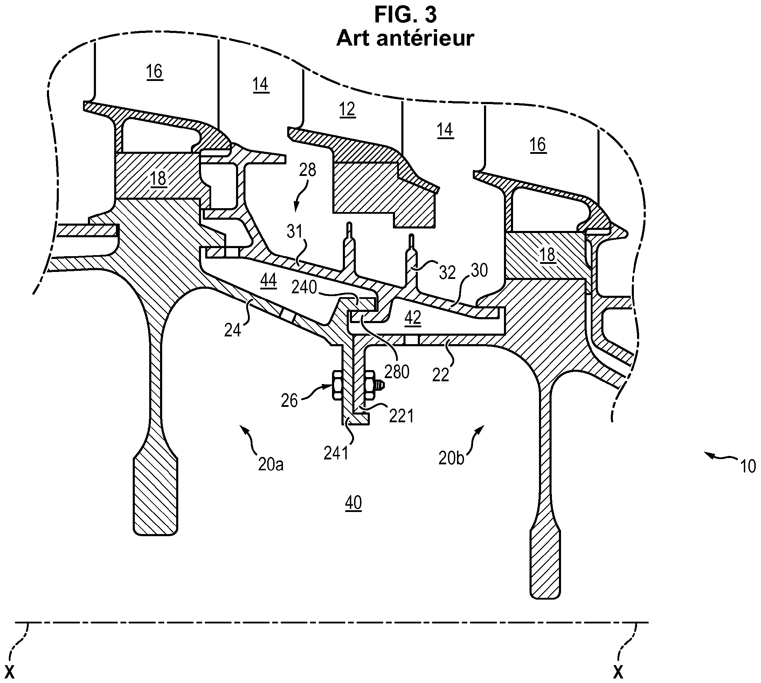

En référence à la figure 3, l'anneau mobile 28 comprend un crochet 280 coopérant avec un crochet 240 de virole aval 24 de disque amont 20a. Cette coopération empêche la dilatation thermique de l'anneau d'étanchéité vers la veine d'écoulement d'air 14. En outre, l'alignement radial des léchettes d'étanchéité 32, des crochets 280, 240 et de la liaison boulonnée 26 autorise un refroidissement plus performant des léchettes 32. En effet, la liaison boulonnée 26 et les crochets 280, 240 baignent dans des cavités 40, 42, 44 où circule de l'air plus froid que dans la veine d'écoulement 14. Enfin, la coopération des crochets 240, 280 ayant lieu par friction, les vibrations engendrées par la mise en rotation des disques 20a, 20b peuvent entrainer des fuites à la jonction des crochets.

En effet, la dilation thermique de l'anneau mobile 28, même réduite, risque d'entraîner l'ouverture de la bride de fixation 241 de virole aval 24 de disque amont 20a, qui porte le crochet 240 et la coopération des crochets 280, 240 n'empêche pas la mise en rotation de l'anneau mobile 28 par rapport aux disques rotor 20a, 20b. Or, en fonctionnement, les contraintes dynamiques dans la turbine 10 peuvent entraîner une telle mise en rotation, ce qui génère des usures des différents éléments de l'ensemble, et réduit la durée de vie de la turbomachine. FR3019584 et FR2995036 divulguent une turbomachine selon le préambule de la revendication 1.

Il existe donc un besoin d'ensemble pour turbine de turbomachine comprenant un anneau mobile d'étanchéité, et ne présentant pas les inconvénients de l'art antérieur.

### DESCRIPTION DE L'INVENTION

Un des buts de l'invention est d'augmenter la durée de vie des turbines de turbomachine en limitant le phénomène d'ouverture de brides au niveau de la jonction entre les disques de rotor successifs.

Un autre but de l'invention est de permettre une meilleure tenue mécanique des brides de jonction des disques de rotor successifs de turbine de turbomachine soumises à de fortes contraintes thermiques.

Un autre but de l'invention est d'assurer le refroidissement des alvéoles de jonction entre les disques de rotor et les aubes de turbine.

Un autre but de l'invention est d'assurer l'étanchéité entre les cavités amont et aval de la turbine.

Un autre but de l'invention est de simplifier la maintenance des turbines de turbomachine.

Un autre but de l'invention est d'assurer l'anti-rotation de l'anneau d'étanchéité par rapport aux disques rotor, en fonctionnement.

A cet égard, l'invention a pour objet un ensemble pour turbine de turbomachine comprenant :
- un premier disque rotor de turbine centré sur un axe longitudinal de turbomachine,
- un deuxième disque rotor de turbine centré sur l'axe longitudinal de turbomachine, et fixé sur le premier disque rotor par boulonnage,
- une pièce formant anneau mobile, ladite pièce portant des léchettes radiales d'étanchéité,

caractérisé en ce qu'il comprend un système d'anti-rotation de l'anneau mobile par rapport aux disques rotor, ledit système comprenant :
   - une bride de fixation de disque rotor présentant une pluralité de dents réparties circonférentiellement autour de l'axe longitudinal de turbomachine, et
   - une bride de fixation d'anneau mobile présentant une pluralité de tenons répartis circonférentiellement autour de l'axe longitudinal de turbomachine,
la mise en prise de la bride de fixation de disque rotor avec la bride de fixation d'anneau mobile assurant, via les dents et les tenons, l'anti-rotation de l'anneau mobile par rapport aux disques rotor.

Dans un tel ensemble, l'anneau mobile est désolidarisé de la liaison boulonnée de sorte à ne plus être exposé au gradient de température. Les brides de disques subissent des contraintes fortement diminuées et leur durée de vie est significativement augmentée. En outre, le système anti-rotation empêche la mise en rotation de l'anneau mobile par rapport aux disques en fonctionnement. De plus, la mise en prise des dents et des tenons assure que, en cas de dilatation thermique de l'anneau mobile, ou d'efforts centrifuges, les contraintes exercées sur la liaison boulonnée restent limitées. Enfin, l'ensemble permet de conserver les fonctions initiales de l'anneau mobile, c'est-à-dire l'étanchéité et la participation à la ventilation des alvéoles des disques rotor.

Avantageusement, mais facultativement, l'ensemble selon l'invention peut en outre comprendre au moins l'une des caractéristiques suivantes, prises seules ou en combinaison :
- chaque tenon est séparé d'un tenon adjacent par une gorge, la mise en prise de la bride de fixation de disque rotor avec la bride de fixation d'anneau mobile étant assurée par la coopération de la pluralité des dents radiales avec la pluralité des gorges,
- au moins un des disques rotor comprend des lunules pratiquées au niveau de la fixation entre les disques rotor, chaque lunule débouchant sur une gorge de la bride de fixation d'anneau mobile,
- il comprend un joint d'étanchéité configuré pour isoler la cavité formée entre l'anneau mobile et le premier disque rotor d'une part, et la cavité formée entre l'anneau mobile et le deuxième disque rotor d'autre part,
- la bride de fixation de disque rotor est ménagée sur le premier disque rotor, et
- la bride de fixation de disque rotor est ménagée sur le deuxième disque rotor.

L'invention a également pour objet une turbomachine, comprenant un ensemble selon la description qui précède.

L'invention a enfin pour objet un procédé de montage d'un ensemble tel que précédemment décrit, comprenant les étapes de :
- mise en place du système anti-rotation par mise en prise des dents de la bride de fixation de disque rotor avec les tenons de la bride de fixation d'anneau mobile, et
- fixation de l'anneau mobile sur une virole aval du premier disque amont.

Avantageusement, mais facultativement, le procédé selon l'invention peut en outre comprendre au moins l'une des caractéristiques suivantes, prises seules ou en combinaison :
- un jeu radial ménagé au montage entre la surface externe des disques et la surface interne de l'anneau mobile est supprimé par frettage de la surface interne de l'anneau mobile sur la surface externe du premier disque rotor,
- un jeu axial est ménagé au montage entre la bride de fixation de l'anneau mobile et la bride de fixation du premier disque rotor, et
- un jeu axial est ménagé au montage entre la bride de fixation de l'anneau mobile et la bride de fixation du deuxième disque rotor.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente un ensemble pour turbine d'une turbomachine connue de l'état de la technique,
- La figure 2, déjà décrite également, illustre un phénomène d'ouverture de brides au niveau d'une liaison boulonnée de disques rotor de turbine de turbomachine,
- La figure 3, déjà décrite également, représente un autre ensemble pour turbine d'une turbomachine connue de l'état de la technique,
- La figure 4 est une vue en coupe schématique d'un premier exemple de réalisation d'un ensemble pour turbine de turbomachine selon l'invention,
- La figure 5 est une vue en perspective agrandie d'éléments de l'exemple de réalisation d'un ensemble pour turbine de turbomachine illustré sur la figure 4,
- La figure 6 est une vue en coupe schématique agrandi d'un deuxième exemple de réalisation d'un ensemble pour turbine de turbomachine selon l'invention,
- La figure 7 est une vue en coupe schématique agrandi d'un troisième exemple de réalisation d'un ensemble pour turbine de turbomachine selon l'invention,
- La figure 8 est une vue en coupe schématique agrandi d'un quatrième exemple de réalisation d'un ensemble pour turbine de turbomachine selon l'invention,
- La figure 9a illustre la première étape d'un exemple de réalisation d'un procédé de montage selon l'invention d'un ensemble pour turbine de turbomachine, et
- La figure 9b illustre la seconde étape d'un exemple de réalisation d'un procédé de montage selon l'invention d'un ensemble pour turbine de turbomachine.

### DESCRIPTION DETAILLEE DE L'INVENTION

En référence aux figures, on va maintenant décrire un ensemble 1 pour turbine 10 de turbomachine.

Dans tout ce qui va suivre, l'amont et l'aval sont définis par rapport au sens d'écoulement des gaz au sein de la turbomachine.

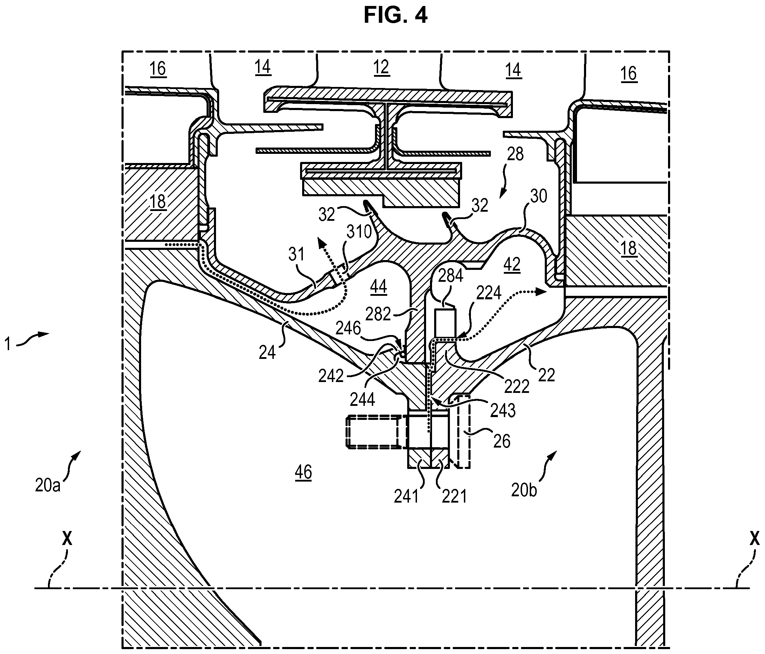

En référence à la figure 4, un tel ensemble 1 comprend :
- un premier disque rotor 20a de turbine 10 centré sur un axe longitudinal X-X de turbomachine,
- un deuxième disque rotor 20b de turbine 10 centré sur l'axe longitudinal X-X de turbomachine, et fixé sur le premier disque rotor 20a par boulonnage 26,
- une pièce formant anneau mobile 28, ladite pièce 28 portant des léchettes radiales d'étanchéité 32,

En outre, un tel ensemble 1 comprend un système d'anti-rotation de l'anneau mobile 28 par rapport aux disques rotor 20a, 20b, ledit système comprenant :
- une bride de fixation de disque rotor 222 présentant une pluralité de dents 224 réparties circonférentiellement autour de l'axe longitudinal X-X de turbomachine, et
- une bride de fixation d'anneau mobile 282 présentant une pluralité de tenons 284 répartis circonférentiellement autour de l'axe longitudinal X-X de turbomachine,
la mise en prise de la bride de fixation de disque rotor 222 avec la bride de fixation d'anneau mobile 224 assurant, via les dents 224 et les tenons 284, l'anti-rotation de l'anneau mobile 28 par rapport aux disques rotor 20a, 20b.

En outre, comme visible sur la figure 4, la turbine 10 comprend un distributeur formé d'une pluralité d'aubes fixes 12 disposées dans une veine d'écoulement 14, et d'une roue mobile placée en aval du distributeur et formée d'une pluralité d'aubes mobiles 16 également disposées dans la veine d'écoulement 14 et montées par leur pied dans des alvéoles 18 des disques de rotor 20a, 20b.

Les disques de rotor de la turbine 20a, 20b sont assemblés entre eux au moyen de viroles amont 22 et aval 24 qui sont fixées entre elles par une liaison boulonnée 26 traversant des brides de fixation 221 et 241. Cet assemblage de disques 20a, 20b est lui-même relié à un arbre de turbine (non représenté) pour être entraîné en rotation.

L'anneau mobile 28 comprend une bride de maintien aval 30 venant en appui contre le deuxième disque 20b, et une bride de maintien amont 31 en appui contre le premier disque 20a.

Comme également visible sur la figure 4, dans un mode de réalisation, les dents 224 sont radiales et les tenons 284 sont axiaux, par rapport à l'axe longitudinal X-X, de sorte à ce que leur coopération assure l'anti-rotation de l'anneau mobile 28 par rapport aux disques rotor 20a, 20b. Alternativement, les dents 224 peuvent être axiales et les tenons 284 radiaux, toujours par rapport à l'axe longitudinal X-X. Dans ce mode de réalisation alternatif (non représenté), les dents axiales 224 peuvent faire saillie au niveau de la surface amont de la bride de fixation de disque rotor 222, tandis que les tenons radiaux 284 peuvent faire saillie au niveau de la surface interne de la bride de fixation 282 de l'anneau mobile 28.

Par la suite, un ensemble 1 va être plus précisément décrit en référence au mode de réalisation illustré sur la figure 4. Ceci n'est cependant pas limitatif, puisque les caractéristiques décrites ci-dessous peuvent également être appliquées à un ensemble 1 comprenant des dents axiales 224 et des tenons radiaux 284.

### Système d'anti-rotation

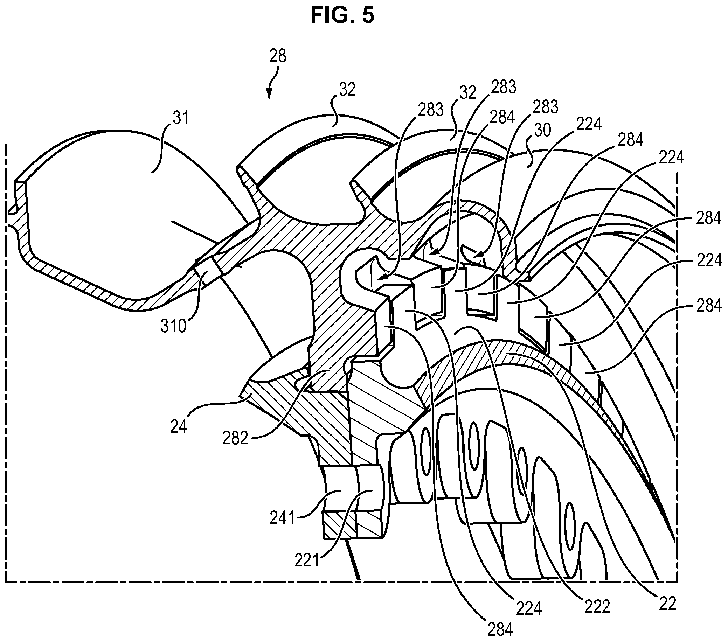

En référence à la figure 5, le système d'anti-rotation va à présent être décrit plus en détails.

Comme visible sur la figure 5, chaque tenon 284 est séparé d'un tenon adjacent 284 par une gorge 283, également ménagée dans la bride de fixation d'anneau mobile 282. Ainsi, la bride de fixation d'anneau mobile 282 présente une pluralité de gorges 283 réparties circonférentiellement autour de l'axe longitudinale X-X de turbomachine, la pluralité de gorges étant positionnée en alternance avec la pluralité de tenons 284. De manière privilégiée, les tenons 284 et les gorges 283 sont équiréparties circonférentiellement autour de l'axe X-X de turbomachine.

Comme également visible sur la figure 5, la mise en prise de la bride de fixation de disque rotor 222 avec la bride fixation d'anneau mobile 282 est assurée par la coopération de la pluralité de dents 224 avec la pluralité de gorges 283. De manière privilégiée, la bride de fixation de disque rotor 222 présente le même nombre de dents 224 que le nombre de gorges 283 présentées par la bride de fixation d'anneau mobile 282. En outre, les tenons 284 coopèrent avec les espaces ménagés entre les dents 224.

Le nombre, la forme et les dimensions de tenons 284, des gorges 283 et des dents 224 peuvent être ajustés selon différents modes de réalisation qui ne seront pas plus détaillés ici. Cet ajustement peut notamment dépendre des contraintes mécaniques et thermiques auxquelles l'ensemble 1 est soumis en fonctionnement.

En tout état de cause, en fonctionnement, les mouvements tangentiels relatifs de l'anneau mobile 28 par rapport aux disques 20a, 20b sont réduits. En outre, le système d'anti-rotation de l'ensemble 1 autorise des dilatations thermiques de l'anneau mobile 28 en limitant les efforts exercés sur les brides de fixation 221, 241. Enfin, le système d'anti-rotation allège significativement la masse de l'ensemble en supprimant la bride de fixation de l'anneau mobile 28 à la liaison boulonnée 26, tout en étant simple à mettre en oeuvre lors de montage et démontage, par exemple lors de maintenance, comme il sera décrit par la suite.

### Système de ventilation

De retour à la figure 4, l'ensemble 1 comprend un système de ventilation, qui fait circuler de l'air frais en amont et en aval de l'anneau mobile 28, dans les alvéoles 18 des disques 20a, 20b.

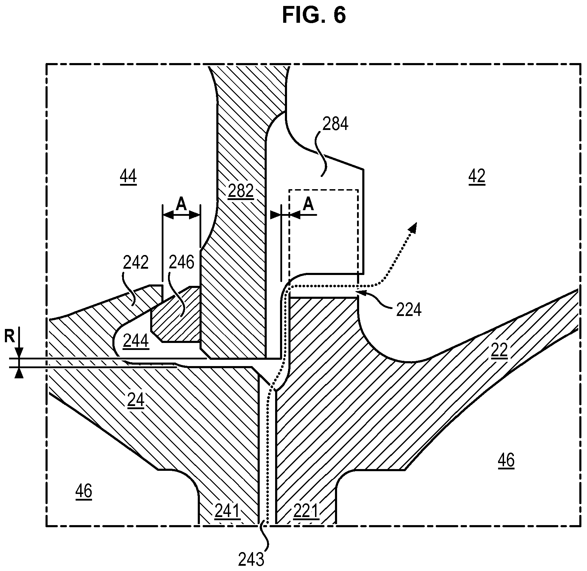

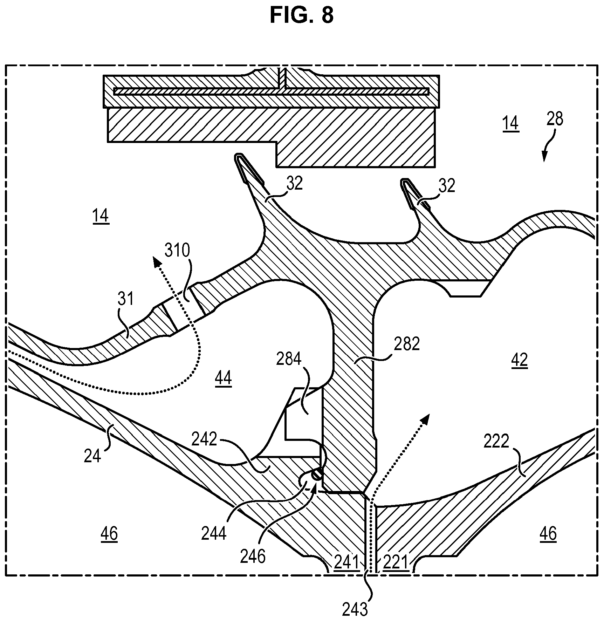

Un tel système prélève de l'air frais en un autre point de la turbomachine, typiquement au niveau du compresseur basse pression (non représenté). Comme également visible sur les figures 6, 7 et 8, l'air est ensuite acheminé jusque dans une cavité de rotor 46, pour ensuite circuler à travers la liaison boulonnée 36 jusque dans la cavité 42 formée entre l'anneau mobile 28 et le deuxième disque rotor 20b. De là, l'air frais circule dans les alvéoles 18, pour finalement alimenter la cavité formée entre un deuxième anneau mobile (non représenté) et le deuxième disque rotor 20b, puis être évacué vers la veine d'écoulement via un trou de vidange ménagé dans le deuxième anneau mobile. Comme visible sur les figures 4 et 8, la cavité 44 formée entre l'anneau mobile 28 et le premier disque rotor 20a reçoit également de l'air en provenance des alvéoles 18 de premier disque rotor 20a, l'air étant ensuite évacué par le trou de vidange 310 ménagé dans la bride de maintien amont 31 de l'anneau mobile 28.

La circulation de l'air frais à travers la liaison boulonnée est mise en oeuvre par l'intermédiaire de lunules 243 pratiquées au niveau de la fixation entre les disques rotor 20a, 20b, comme notamment visible sur la figure 4. De manière avantageuse, chaque lunule 243 est pratiquée dans au moins un des premier et deuxième disque rotor 20a, 20b et débouche sur une gorge 283 de la bride de fixation d'anneau mobile 222, afin de permettre à l'air d'être évacué vers la cavité 42 formée entre l'anneau mobile 28 et le deuxième disque rotor 20b.

Outre les alvéoles 28, un tel système de ventilation permet avantageusement de réduire les gradients thermiques au sein de la liaison boulonnée 36 et de l'anneau mobile 28.

### Etanchéité

Toujours en référence à la figure 4, l'ensemble 1 peut également comprendre un joint d'étanchéité 246 configuré pour isoler la cavité 44 formée entre l'anneau mobile 28 et le premier disque rotor 20a d'une part, et la cavité 42 formée entre l'anneau mobile 28 et le deuxième disque rotor 20b d'autre part.

Un tel joint d'étanchéité 246 peut prendre une forme torique et s'étendre circonférentiellement autour de l'axe longitudinal X-X de turbomachine, par exemple au sein d'une cavité annulaire 244 ménagée à cet effet dans la virole aval 24. La cavité annulaire 244 présente une ouverture qui fait face à la bride de fixation de l'anneau mobile 282, qui est formé par une extension annulaire 242 faisant saillie de la virole amont 24.

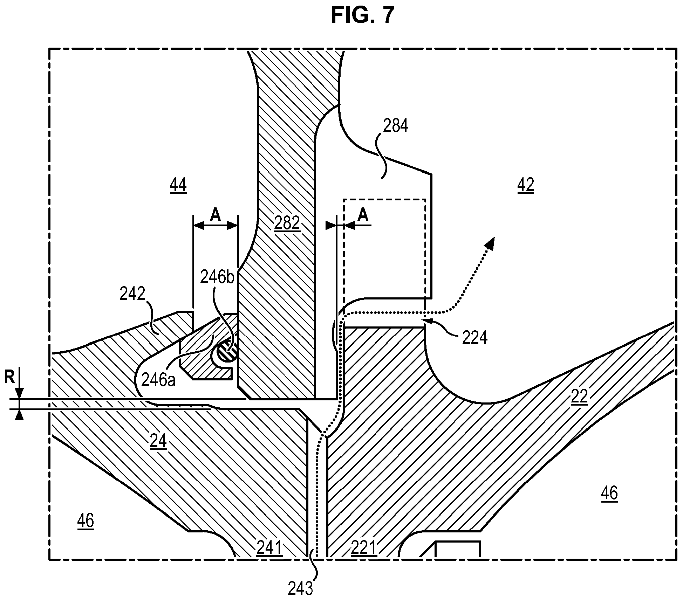

Différents modes de réalisation du joint d'étanchéité 246 ont été illustrés sur les figures 6, 7 et 8. Sur ces figures, on constate qu'il existe un jeu axial A entre la surface amont de la bride de fixation d'anneau mobile 282 et la surface aval de l'extension annulaire 242. Il peut en effet arriver que, lors du montage de l'ensemble 1, l'équilibrage de l'ensemble 1 nécessite de ménager un tel jeu afin d'assurer la stabilité dynamique de l'ensemble 1 en fonctionnement. De tels jeux peuvent cependant être dommageables pour les fonctions d'étanchéité de l'ensemble 1. Pour ce faire, comme visible sur les figures 6, 7, et 8, il est possible de dimensionner le joint d'étanchéité 246 de sorte à combler le jeu axial A. Sur la figure 6, la forme annulaire en toron coupé, d'une seule pièce, du joint d'étanchéité 246 est telle que les surfaces de contact dudit joint d'étanchéité 246 sont confondues avec la surface amont de la bride de fixation d'anneau mobile 282 d'une part, et la surface aval de l'extension annulaire 242 d'autre part. Une telle configuration est mise en oeuvre pour combler un jeu axial A de dimension grande par rapport à la taille de la cavité annulaire 244. Sur la figure 8, le joint 246 présente une forme torique annulaire particulièrement utile lorsque la dimension du jeu axial A est faible devant la taille de la cavité annulaire 244. En effet, sa forme permet de s'adapter, par exemple par écrasement, aux surfaces 242, 282 à recouvrir. Enfin, sur la figure 7, on distingue un mode de réalisation hybride du joint 246 comprenant un toron coupé 246a dont les dimensions permettent d'accommoder des variations de jeu axial A, et un joint torique annulaire 246b garantissant l'étanchéité de la jonction entre la bride fixation d'anneau mobile 282 et l'extension en saillie 242.

### Bride de fixation de disque rotor

Sur les figures 4 à 7, la bride de fixation de disque rotor 222 est ménagée sur le deuxième disque rotor 20b, au niveau d'une surface externe de la virole amont 22 de disque aval 20b, de sorte que le système d'anti-rotation se situe en aval de l'anneau mobile 28.

Dans un tel mode de réalisation de l'ensemble 1, le montage de l'anneau mobile 28 sur la virole aval 24 de disque amont 20a, est réalisé indépendamment de l'étape de mise en prise des dents 224 et des tenons 284. En effet, l'étape de montage est mise en oeuvre afin de faciliter l'équilibrage et le serrage pour qu'ils s'annulent en fonctionnement, tandis que, lors de l'étape de mise en prise, il est nécessaire d'orienter angulairement l'anneau mobile 28 afin d'aligner les dents 224 et les tenons 284. Ceci peut nécessiter un outillage spécifique et/ou un repérage angulaire sur chaque pièce.

Afin d'éviter toute ambigüité, dans un mode de réalisation alternatif illustré sur la figure 8, la bride de fixation de disque rotor est ménagée sur le premier disque rotor 20a, au niveau d'une surface externe de la virole aval 24, en étant par exemple confondue avec l'extension annulaire en saillie 242. Grâce à cette configuration, les étapes d'équilibrage, de serrage et d'alignement peuvent être mises en oeuvre simultanément, de sorte à optimiser le fonctionnement de l'ensemble 1. En outre, une telle configuration réduit le temps de construction et/ou de maintenance de l'ensemble 1.

### Tenue mécanique et augmentation de la durée de vie

L'ensemble 1 permet donc une augmentation de la durée de vie de turbine 10 de turbomachine par réduction du phénomène d'ouverture de brides 221, 241 au niveau des liaisons boulonnées 36 qui relient les différents disques de rotor 20a, 20b de turbine 10.

En effet, lors de l'écoulement des gaz dans la turbine 10, l'anneau mobile 28 va s'échauffer. Dans la mesure où il n'y a plus de continuité mécanique entre l'anneau mobile 28 et la liaison boulonnée 26, seul l'anneau mobile 28 va se dilater, et n'entraînera donc pas de contraintes importantes sur les autres brides 221 et 241 de la liaison boulonnée 26.

Par conséquent, la tenue mécanique des liaisons boulonnées 26 des turbines 10 de turbomachines comprenant un ensemble du type de l'ensemble 1 qui vient d'être décrit est amélioré. En outre, la liaison boulonnée 26 est allégée, ce qui permet un meilleur maintien du couple de serrage. Il en résulte une augmentation de leur durée de vie.

### Procédé de montage

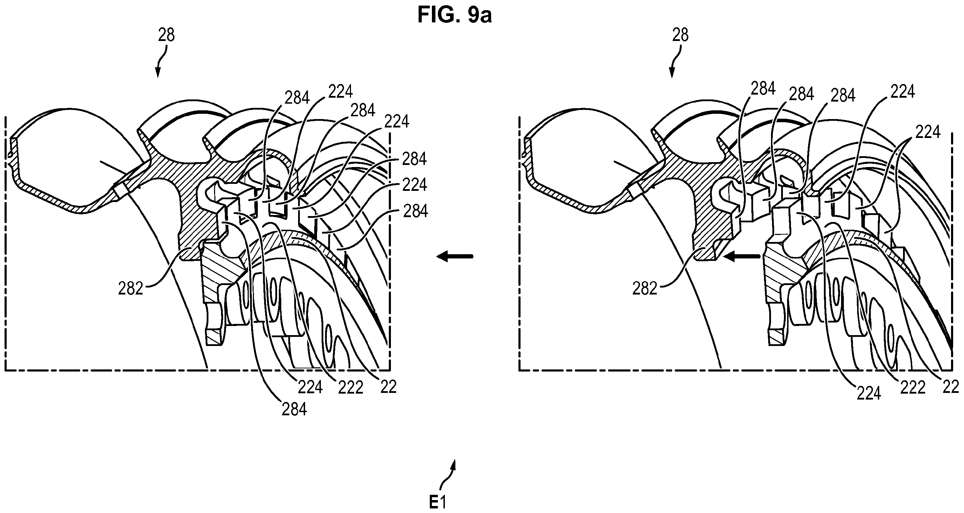

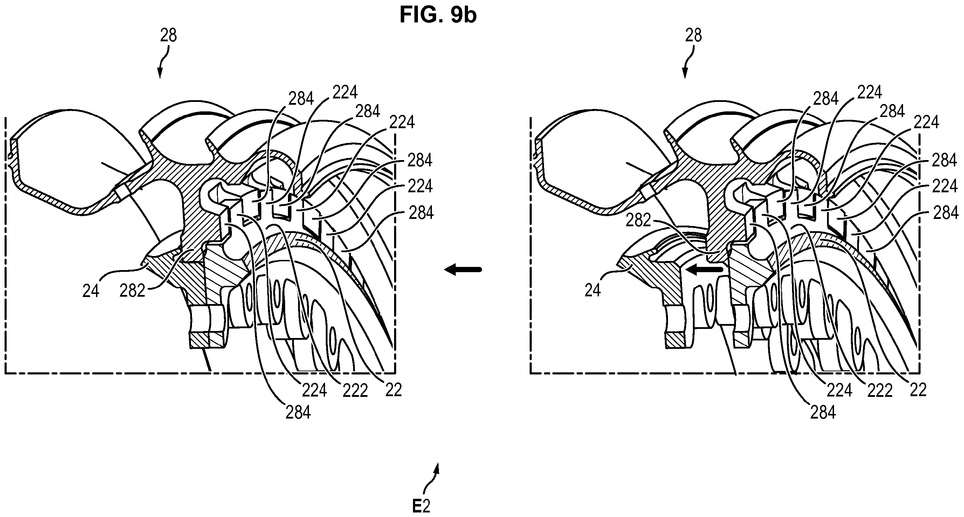

En référence aux figures 9a et 9b, on va maintenant décrire un procédé de montage E d'un ensemble 1 tel que précédemment décrit.

Un tel procédé de montage E comprend les étapes de :
- mise en place E1 du système anti-rotation par mise en prise des dents 224 de la bride de fixation de disque rotor 222 avec les tenons 284 de bride de fixation d'anneau mobile 282, et
- fixation E2 de l'anneau mobile 28 sur une virole aval 24 du premier disque amont 20a,

De préférence, la fixation E2 de l'anneau mobile 28 se fait de manière radialement serrée, de sorte à limiter le balourd voir l'annuler par un désaxage entre les disques rotor 20a, 20b d'une part, et l'anneau mobile 28 d'autre part, en cas d'ajustement glissant mettant en oeuvre des jeux axiaux A et radiaux R.

En effet, de manière privilégiée, afin d'assurer les fonctions de l'anneau mobile 28, il est nécessaire que la masse en dessous des léchettes d'étanchéité 32 soit suffisante pour contrer les efforts radiaux que subit l'anneau mobile 28 en fonctionnement. Dès lors, s'il n'est pas possible de rendre l'ensemble 1 rigide lors de son montage et de son équilibrage, pour qu'il devienne ensuite désolidarisé en rotation sous l'effet centrifuge en fonctionnement, un jeu radial R est ménagé entre la surface externe des disques 20a, 20b et la surface interne de l'anneau mobile 28, comme visible sur les figures 6 et 7.

Par la suite, la fixation E2 de l'anneau mobile 28 peut être mise en oeuvre par frettage de l'anneau mobile 28 sur la virole aval 24 de disque amont 20a. Un tel frettage peut alors impliquer la dilatation thermique de l'anneau mobile 28. Le jeu radial R est donc supprimé par frettage de la surface interne de l'anneau mobile 28 sur la surface externe du premier disque rotor 20a. Il est à noter que, suite à l'apparition des jeux, en fonctionnement, par dilation thermique des différents éléments de l'ensemble 1, les fuites peuvent être limitées par la présence du joint d'étanchéité 246 décrit ci-dessus.

Outre le jeu radial R, et pour les mêmes raisons, il peut également être nécessaire, lors du procédé de montage, de ménager un jeu axial A entre la bride de fixation de l'anneau mobile 282 et la bride de fixation 242 du premier disque rotor 20a, dans le mode de réalisation illustré en figure 8, ou de ménager un jeu axial A entre la bride de fixation de l'anneau mobile 282 et la bride de fixation 222 du deuxième disque rotor 20b, dans le mode de réalisation illustré en figures 4 à 7. Dans la mesure où les jeux axiaux A permettent de réaliser un serrage efficace entre les disques 10a, 20b, et l'anneau mobile 28, l'isostatisme de l'ensemble 1 est amélioré. En outre, dans un mode de réalisation tel qu'illustré sur les figures 6 et 7, un tel jeu axial A, en aval de la bride de fixation de l'anneau mobile 282, permet également de simplifier la mise en oeuvre du système de ventilation, puisqu'il n'est ainsi plus nécessaire que chaque lunule 243 débouche sur une gorge 283 de la bride de fixation d'anneau mobile 222, afin de permettre à l'air d'être évacué vers la cavité 42 formée entre l'anneau mobile 28 et le deuxième disque rotor 20b.

Grâce à un tel procédé de montage E, l'utilisation d'outillage complexe est avantageusement réduite.

## Revendications

1. Ensemble (1) pour turbine (10) de turbomachine comprenant :
- un premier disque rotor (20a) de turbine (10) centré sur un axe longitudinal (X-X) de turbomachine,
- un deuxième disque rotor (20b) de turbine (10) centré sur l'axe longitudinal (X-X) de turbomachine, et fixé sur le premier disque rotor (20a) par boulonnage (26),
- une pièce formant anneau mobile (28), ladite pièce (28) portant des léchettes radiales d'étanchéité (32),
**caractérisé en ce qu'**il comprend un système d'anti-rotation de l'anneau mobile (28) par rapport aux disques rotor (20a, 20b), ledit système comprenant :
- une bride de fixation de disque rotor (222, 242) présentant une pluralité de dents (224) réparties circonférentiellement autour de l'axe longitudinal (X-X) de turbomachine, et
- une bride de fixation d'anneau mobile (282) présentant une pluralité de tenons (284) répartis circonférentiellement autour de l'axe longitudinal (X-X) de turbomachine,
la mise en prise de la bride de fixation de disque rotor (222, 242) avec la bride de fixation d'anneau mobile (282) assurant, via les dents (224) et les tenons (284), l'anti-rotation de l'anneau mobile (28) par rapport aux disques rotor (20a, 20b).

2. Ensemble (1) selon la revendication 1, dans lequel chaque tenon (284) est séparé d'un tenon (284) adjacent par une gorge (283), la mise en prise de la bride de fixation de disque rotor (222, 242) avec la bride de fixation d'anneau mobile (282) étant assurée par la coopération de la pluralité des dents (224) avec la pluralité des gorges (283).

3. Ensemble (1) selon la revendication 2, dans lequel au moins un des disques rotor (20a, 20b) comprend des lunules (243) pratiquées au niveau de la fixation (26) entre les disques rotor (20a, 20b), chaque lunule (243) débouchant sur une gorge (283) de la bride de fixation d'anneau mobile (282).

4. Ensemble (1) selon l'une des revendications 1 à 3, comprenant un joint d'étanchéité (246) configuré pour isoler la cavité (44) formée entre l'anneau mobile (28) et le premier disque rotor (20a) d'une part, et la cavité (42) formée entre l'anneau mobile (28) et le deuxième disque rotor (20b) d'autre part.

5. Ensemble (1) selon l'une des revendications 1 à 4, dans lequel la bride de fixation de disque rotor (242) est ménagée sur le premier disque rotor (20a).

6. Ensemble (1) selon l'une des revendications 1 à 4, dans lequel la bride de fixation de disque rotor (222) est ménagée sur le deuxième disque rotor (20b).

7. Turbomachine comprenant un ensemble (1) selon l'une des revendications 1 à 6.

8. Procédé de montage (E) d'un ensemble selon l'une des revendications 1 à 6, comprenant les étapes de :
- mise en place (E1) du système anti-rotation par mise en prise des dents (224) de la bride de fixation de disque rotor (222) avec les tenons (284) de la bride de fixation d'anneau mobile (282), et
- fixation (E2) de l'anneau mobile (28) sur une virole aval (24) du premier disque amont (20a).

9. Procédé de montage (E) selon la revendication 8, dans lequel un jeu radial (R) ménagé au montage entre la surface externe des disques (20a, 20b) et la surface interne de l'anneau mobile (28) est supprimé par frettage de la surface interne de l'anneau mobile (28) sur la surface externe du premier disque rotor (20a).

10. Procédé de montage (E) selon l'une des revendications 8 ou 9, en combinaison avec la revendication 5, dans lequel un jeu axial (A) est ménagé au montage entre la bride de fixation de l'anneau mobile (282) et la bride de fixation (242) du premier disque rotor (20a).

11. Procédé de montage (E) selon l'une des revendications 8 ou 9, en combinaison avec la revendication 6, dans lequel un jeu axial (A) est ménagé au montage entre la bride de fixation de l'anneau mobile (282) et la bride de fixation (222) du deuxième disque rotor (20b).

## Patentansprüche

1. Anordnung (1) für eine Turbine (10) einer Turbomaschine umfassend:
- eine erste Rotorscheibe (20a) der Turbine (10), die auf eine Längsachse (X-X) der Turbomaschine zentriert ist,
- eine zweite Rotorscheibe (20b) der Turbine (10), die auf die Längsachse (X-X) der Turbomaschine zentriert ist und durch Verschraubung (26) an der ersten Rotorscheibe (20a) befestigt ist,
- ein bewegliches Ringelement (28), wobei das Element (28) radiale Dichtlippen (32) trägt,
**dadurch gekennzeichnet, dass** sie ein System zur Verdrehsicherung des beweglichen Rings (28) in Bezug auf die Rotorscheiben (20a, 20b) umfasst, wobei das System umfasst:
- einen Rotorscheiben-Befestigungsflansch (222, 242) mit einer Vielzahl von Zähnen (224), die in Umfangsrichtung um die Längsachse (X-X) der Turbomaschine verteilt sind, und
- einen Befestigungsflansch für den beweglichen Ring (282) mit einer Vielzahl von Nasen (284), die in Umfangsrichtung um die Längsachse (X-X) der Turbomaschine verteilt sind, und
wobei das Ineinandergreifen des Befestigungsflansches der Rotorscheibe (222, 242) mit dem Befestigungsflansch des beweglichen Rings (282) über die Zähne (224) und die Nasen (284) die Verdrehsicherung des beweglichen Rings (28) in Bezug auf die Rotorscheiben (20a, 20b) gewährleistet.

2. Anordnung (1) nach Anspruch 1, wobei jede Nase (284) durch eine Kehle (283) von einer benachbarten Nase (284) getrennt ist, wobei das Ineinandergreifen des Befestigungsflansches der Rotorscheibe (222, 242) mit dem Befestigungsflansch des beweglichen Rings (282) durch das Zusammenwirken der Vielzahl von Zähnen (224) mit der Vielzahl von Kehlen (283) sichergestellt wird.

3. Anordnung (1) nach Anspruch 2, wobei mindestens eine der Rotorscheiben (20a, 20b) mondförmige Öffnungen (243) umfasst, die an der Befestigung (26) zwischen den Rotorscheiben (20a, 20b) ausgeführt werden, wobei jede mondförmige Öffnung (243) in eine Kehle (283) des Befestigungsflansches des beweglichen Rings (282) mündet.

4. Anordnung (1) nach einem der Ansprüche 1 bis 3, umfassend eine Dichtung (246), die dafür konfiguriert ist, einerseits den Hohlraum (44) zwischen dem beweglichen Ring (28) und der ersten Rotorscheibe (20a) und andererseits den Hohlraum (42) zwischen dem beweglichen Ring (28) und der zweiten Rotorscheibe (20b) zu isolieren.

5. Anordnung (1) nach einem der Ansprüche 1 bis 4, wobei der Befestigungsflansch der Rotorscheibe (242) an der ersten Rotorscheibe (20a) ausgebildet ist.

6. Anordnung (1) nach einem der Ansprüche 1 bis 4, wobei der Befestigungsflansch der Rotorscheibe (222) an der zweiten Rotorscheibe (20b) ausgebildet ist.

7. Turbomaschine umfassend eine Anordnung (1) nach einem der Ansprüche 1 bis 6.

8. Montageverfahren (E) für eine Anordnung nach einem der Ansprüche 1 bis 6, wobei das Verfahren die Schritte umfasst:
- Umsetzen (E1) des Verdrehsicherungssystems durch Ineinandergreifen der Zähne (224) des Befestigungsflansches der Rotorscheibe (222) mit den Nasen (284) des Befestigungsflansches des beweglichen Rings (282), und
- Befestigen (E2) des beweglichen Ringes (28) an einem nachgelagerten Klemmring (24) der ersten vorgelagerten Scheibe (20a).

9. Montageverfahren (E) nach Anspruch 8, wobei ein bei der Montage vorgesehenes radiales Spiel (R) zwischen der Außenfläche der Scheiben (20a, 20b) und der Innenfläche des beweglichen Rings (28) durch Aufschrumpfen der Innenfläche des beweglichen Rings (28) auf die Außenfläche der ersten Rotorscheibe (20a) beseitigt wird.

10. Montageverfahren (E) nach einem der Ansprüche 8 oder 9 in Verbindung mit Anspruch 5, wobei bei der Montage zwischen dem Befestigungsflansch des beweglichen Rings (282) und dem Befestigungsflansch (242) der ersten Rotorscheibe (20a) ein axiales Spiel (A) vorgesehen wird.

11. Montageverfahren (E) nach einem der Ansprüche 8 oder 9 in Verbindung mit Anspruch 6, wobei bei der Montage zwischen dem Befestigungsflansch des beweglichen Rings (282) und dem Befestigungsflansch (222) der zweiten Rotorscheibe (20b) ein axiales Spiel (A) vorgesehen wird.

## Claims

1. An assembly (1) for a turbine (10) of a turbomachine comprising:
- a first rotor disc (20a) of a turbine (10) centered on a longitudinal axis (X-X) of the turbomachine,
- a second rotor disc (20b) of a turbine (10) centered on the longitudinal axis (X-X) of the turbomachine, and fastened to the first rotor disc (20a) by bolting (26),
- a part forming a movable ring (28), said part (28) carrying radial sealing knives (32),
**characterized in that** it comprises a system for anti-rotation of the movable ring (28) relative to the rotor discs (20a, 20b), said system comprising:
- a rotor disc fastening flange (222, 242) having a plurality of teeth (224) distributed circumferentially around the longitudinal axis (X-X) of the turbomachine, and
- a movable ring fastening flange (282) having a plurality of lugs (284) distributed circumferentially around the longitudinal axis (X-X) of the turbomachine,
the engagement of the rotor disc fastening flange (222, 242) with the movable ring fastening flange (282) ensuring, via the teeth (224) and the lugs (284), the anti-rotation of the movable ring (28) relative to the rotor discs (20a, 20b).

2. The assembly (1) according to claim 1, wherein each lug (284) is separated from an adjacent lug (284) by a groove (283), the engagement of the rotor disc fastening flange (222, 242) with the movable ring fastening flange (282) being ensured by the cooperation of the plurality of teeth (224) with the plurality of grooves (283).

3. The assembly (1) according to claim 2, wherein at least one of the rotor discs (20a, 20b) comprises lunulae (243) formed at the fastener (26) between the rotor discs (20a, 20b), each lunula (243) opening onto a groove (283) of the movable ring fastening flange (282) .

4. The assembly (1) according to one of claims 1 to 3, comprising a seal (246) configured to isolate the cavity (44) formed between the movable ring (28) and the first rotor disc (20a) on the one hand, and the cavity (42) formed between the movable ring (28) and the second rotor disc (20b) on the other hand.

5. The assembly (1) according to one of claims 1 to 4, wherein the rotor disc fastening flange (242) is formed on the first rotor disc (20a).

6. The assembly (1) according to one of claims 1 to 4, wherein the rotor disc fastening flange (222) is formed on the second rotor disc (20b).

7. A turbomachine comprising an assembly (1) according to one of claims 1 to 6.

8. A method for mounting (E) an assembly according to one of claims 1 to 6, comprising the steps of:
- placing (E1) the anti-rotation system by engaging the teeth (224) of the rotor disc fastening flange (222) with the lugs (284) of the movable ring fastening flange (282), and
- fastening (E2) the movable ring (28) on a downstream shroud (24) of the first upstream disc (20a).

9. The mounting method (E) according to claim 8, wherein a radial clearance (R) provided for the mounting between the outer surface of the discs (20a, 20b) and the inner surface of the movable ring (28) is removed by shrink-fitting the inner surface of the movable ring (28) on the outer surface of the first rotor disc (20a).

10. The mounting method (E) according to one of claims 8 or 9, in combination with claim 5, wherein an axial clearance (A) is provided, when mounting, between the movable ring fastening flange (282) and the first rotor disc (20a) fastening flange (242).

11. The mounting method (E) according to one of claims 8 or 9, in combination with claim 6, wherein an axial clearance (A) is provided, when mounting, between the movable ring fastening flange (282) and the second rotor disc (20b) fastening flange (222).
